(19) Europäisches Patentamt
European Patent Office
Office européen des brevets

(11) EP 0 642 694 B1

(12) **EUROPEAN PATENT SPECIFICATION**

(45) Date of publication and mention of the grant of the patent:
**16.09.1998 Bulletin 1998/38**

(21) Application number: **93914025.7**

(22) Date of filing: **21.05.1993**

(51) Int Cl.[6]: **G11B 15/26**, G11B 23/087

(86) International application number:
**PCT/US93/04796**

(87) International publication number:
**WO 93/24928 (09.12.1993 Gazette 1993/29)**

# (54) COATED BELT FOR BELT-DRIVEN TAPE CARTRIDGE

BESCHICHTETE RIEMEN FUR TREIBRIEMEN BANDKASSETTE

COURROIE ENDUITE POUR CASSETTES DE BANDE A ENTRAINEMENT PAR COURROIE

(84) Designated Contracting States:
**CH DE DK ES FR GB IT LI NL**

(30) Priority: **28.05.1992 US 890438**
**06.05.1993 US 58578**

(43) Date of publication of application:
**15.03.1995 Bulletin 1995/11**

(73) Proprietor: **Imation Corp.**
**Oakdale, MN 55128 (US)**

(72) Inventor: **SMITH, David, Phillip**
**Saint Paul, MN 55133-3427 (US)**

(74) Representative:
**Hilleringmann, Jochen, Dipl.-Ing. et al**
**Patentanwälte**
**von Kreisler-Selting-Werner,**
**Bahnhofsvorplatz 1 (Deichmannhaus)**
**50667 Köln (DE)**

(56) References cited:

| | |
|---|---|
| EP-A- 0 188 362 | WO-A-89/08552 |
| WO-A-91/13017 | US-A- 4 328 935 |
| US-A- 4 342 809 | US-A- 4 396 465 |
| US-A- 4 466 564 | US-A- 4 688 742 |

- **PATENT ABSTRACTS OF JAPAN vol. 274, no. 015 (P-1226)11 July 1991 & JP,A,3 093 032 ( KAO CORP ) 18 April 1991**
- **DATABASE WPI Section Ch, Week 0587, Derwent Publications Ltd., London, GB; Class L03, AN 87-031836 & JP,A,61 287 033 (FUJI XEROX) 17 December 1986**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 642 694 B1

## Description

The present invention concerns an improved belt for a belt-driven tape cartridge such as that disclosed in US-A-44 66 564.

In the cartridge of US-A-44 66 564, magnetic recording tape is driven by a thin, continuous, flexible, pretensioned belt which in turn is driven by a single reversible drive motor that provides rapid acceleration and deceleration of the recording tape in either direction. In this known cartridge, the belt is wound around, and therefore exerts pressure on, a belt drive roller, a pair of belt guide rollers, and a tape pack formed by winding the magnetic tape on a pair of tape hubs.

The belt-driven tape cartridge according to US-A-44 66 564 includes a drive belt comprising a substrate with an inner major surface for contacting the belt-guide rollers and an outer major surface for contacting the tape windings on the tape hubs. The outer surface of the substrate is provided with discontinuities promoting the release of air from between the belt and the underlying tape. The discontinuities are formed through particles dispersed in a polymeric binder coated on the outer surface of the drive belt.

JP-A-3093032 discloses some possible particle materials for a belt-driven tape in order to improve its durability.

Over the life of a cartridge, the belt can cause wear at the surface of the drive roller and guide rollers. As the belt erodes the surface of the rollers, tiny particles from the rollers are released into the cartridge. These particles can interfere with the ability to read or write on the magnetic tape by creating "transient errors." Transient errors are non-repeating errors, i.e. the error will not always recur at the same spot when a given portion of magnetic tape passes the tape head for a second time. Transient errors are more troublesome than permanent errors because there is currently no known mechanism for compensating for them.

Transient errors may also be caused by electrostatic discharge within the cartridge. Electrostatic discharge is caused by triboelectric effects which result from rubbing two electrically insulating surfaces together. In a cartridge, the drive belt rubs against the drive roller, guide rollers, and tape pack, which creates a build-up of electricity. This build-up may continue until it reaches a high enough potential, at which point the electricity is discharged. This electrical discharge may cause noise in the electronic read amplifier circuit, producing an error in reading or recording on the magnetic tape. Such a build-up of voltage within the cartridge may also cause dust and other particles outside the cartridge to enter the cartridge, thereby adding to the number of loose particles within the cartridge, thereby increasing transient errors.

Japanese Kokai 64-42088 published on February 14, 1989 refers to a drive belt having an electrical resistance of $10^{10}$ ohms or less. No other characteristics of the belt are described, nor does the document explain how to make such a belt.

US-A-4,342,809 discloses a low elasticity drive belt. The side of the belt that contacts that tape pack, i.e., the side that does not contact the rollers, is coated with an elastomeric coating to improve the contact between the belt and tape pack.

It is the object of the present invention, to provide a belt-driven type cartridge in which transient errors due to wear of cartridge components are reduced.

This object is solved by the features of claims 1 and 6, each.

The present invention relates to a belt-driven tape cartridge including a drive belt wound around a tape pack and one or more rollers. The drive belt has a coating on the face of the belt that is adapted to be disposed toward the roller (s). The coating includes particles dispersed in a polymeric binder. The particles include carbon black particles and aluminum oxide particles. The coating minimizes wear on the roller(s), which reduces the number of loose particles present in the cartridge, which can in turn reduce the number of transient errors that occur in reading and writing the tape. The present invention also includes a belt-driven tape cartridge having the coated belt described above.

The present invention also includes a method of minimizing wear on the rollers in the cartridge. The method includes the steps of providing the above described belt, installing the belt in the cartridge so that the coated surface of the belt contacts the rollers, and driving the belt, whereby the coating minimizes the wear of the rollers by the belt. In one embodiment, the coating can be electrically conductive so that electrical discharge and voltage build-up in the cartridge are minimized.

The present invention also includes a belt-driven tape cartridge having improved tape tension. The cartridge includes a belt tension gradient device positioned between two guide rollers. The device can be a metal pin, and should be oriented so that it contacts the coated surface of the belt.

The novel features and advantages of the present invention will become more apparent to those skilled in the art upon consideration of the following detailed description which refers to the accompanying drawings wherein:

FIGURE 1 is schematic representation of a belt-driven tape cartridge according to the present invention;
FIGURE 2 is a cross section of a coated drive belt according to the present invention;
FIGURE 3 is a graph showing the drive roller wear characteristics of a coated belt according to the present invention;
FIGURE 4 is a graph showing the number of errors due to wear particles per pass of magnetic tape for a cartridge

using a coated belt according to the present invention;
FIGURE 5 is a schematic representation of a belt-driven tape cartridge including a belt tension gradient device according to the present invention;
FIGURE 6 is a graph showing improved average tape tension at low operating tape speeds using a belt tension gradient device according to the present invention;
FIGURE 7 is a graph showing higher minimum tape tension using a belt tension gradient device according to the present invention; and
FIGURE 8 is a graph showing the consistency over time of the coefficient of friction of the coated belt using a belt tension gradient device according to the present invention.

A cartridge 10 is shown in a tape deck 28 in FIGURE 1. The cartridge 10 has a pair of hubs 12 and 14 on which is wound a length of magnetic recording tape 16. A drive belt 18 is wound around a belt drive roller 20, a pair of belt guide rollers 22 and 24, and a tape pack 17 formed by the portion of tape 16 wound around the hubs 12 and 14. When the cartridge 10 is moved into operative position in the tape deck 28 as shown in FIGURE 1, a drive puck 26 of the tape deck 28 contacts the belt drive roller 20, and a magnetic recording head 30 of the deck 28 contacts the tape 16. A belt-contacting portion 32 of the belt drive roller 20 is recessed to permit the tape 16 to pass without touching the drive puck 26.

During operation, the drive puck 26 of the tape deck 28 rotates the belt drive roller 20, which in turn drives the drive belt 18. The drive belt 18 then causes the rotation of the guide rollers 22 and 24 and the tape hubs 12 and 14, causing the magnetic tape 16 to be transferred from one hub to the other.

As shown in FIGURE 2, the drive belt 18 comprises a substrate 40 and a coating 42 provided on the substrate. The substrate 40 has an inner major surface 44 and an outer major surface 46. The inner major surface 44 is defined as the surface of the belt 18 that is disposed toward the rollers 20, 22 and 24, i.e., the surface that does not contact the tape pack 17. Conversely, the outer major surface 46 is defined as the surface of the belt 18 that contacts the tape pack 17. The coating 42 can be provided on either the inner surface 44 or the outer surface 46, or on both surfaces. Preferably, the coating 42 is provided on the inner surface 44 of the belt 18, as shown in FIGURE 2.

The substrate 40 can be formed from any known drive belt material, and is preferably formed from a thin, continuous, flexible polymeric material, such as is used to form the belts disclosed in US-A-3,692,255 and US-A-4,466,564. The drive belt 18 may be made from a ring of polyurethane film having a thickness of about 0.13-.25 mm an outer diameter of about 4.6 cm, and an inner diameter of about 3.2 cm. As utilized in a standard 1/4 inch (6.3 mm) data cartridge, the polyurethane film is stretched to a length of about 43 cm.

In one aspect of the present invention, the coating 42 is designed to minimize the wear on the drive roller 20 and the guide rollers 22 and 24 caused by the drive belt 18. This minimizes the number of loose particles released into the cartridge 10, which decreases the number of transient errors. Thus, the drive belt 18 can be used to minimize the wear on the rollers 20, 22 and 24, by installing the belt in a cartridge 10 so that its coated face contacts the rollers, and driving the belt with the drive puck 26 so as to transfer the tape 16 from one of the tape hubs 12, 14 to the other, whereby the coating 42 minimizes the wear of the rollers by the belt.

In another aspect of the present invention, the coating is preferably electrically conductive, i.e., it should have a low resistivity. This allows the coating to dissipate electrostatic charge otherwise built up at the belt/roller interface as the magnetic tape is transferred from one hub to the other by the drive belt. Thus, voltage build-up within the cartridge and electrical discharge, both of which can contribute to transient errors when reading and writing magnetic tape, are reduced.

Prior art drive belts have a resistivity on the order of about $4 \times 10^{10}$ ohm-cm. The resistivity of the coating 42 on the substrate 40 of stretched drive belts is preferably less than about $1 \times 10^{9}$ ohm-cm, more preferably less than $1 \times 10^{6}$ ohm-cm, still more preferably less than about $1 \times 10^{4}$ ohm-cm, and most preferably less than about $4 \times 10^{2}$ ohm-cm. The resistivity of a coating may be determined by reference to the equation:

$$R = \rho \frac{\ell}{A},$$

where R is the resistance in ohms, $\rho$ is the resistivity in ohm-cm, $\ell$ is the length of the coating in cm, and A is the cross-sectional area of the coating in $cm^2$. Solving for the resistivity $\rho$, the above equation becomes

$$\rho = R \frac{A}{\ell}.$$

For example, if the coating 42 on the substrate 40 is 2.5 µm thick, and if the substrate (and therefore the coating) is 0.4 cm wide, then the cross-sectional area of the coating on the substrate is $1 \times 10^{4}$ $cm^2$. If the resistance R is

measured over a length ℓ of 1 cm, then the equation becomes

$$\rho = R \bullet \frac{1 \times 10^{-4}\ cm^2}{1\ cm},$$

or

$$\rho = R \bullet 10^{-4}\ cm.$$

Accordingly, a coating having a cross-sectional area A of 1 x $10^{-4}$ $cm^2$ and a measured resistance R of $10^8$ ohms over a length ℓ of 1 cm will have a resistivity ρ of $10^{-4}$ ohm-cm.

It has been found that drive belts having an electrically conductive coating according to the present invention will dissipate charge and thereby decrease transient errors due to electrical discharge and voltage build-up even if the coating is applied to the side of the drive belt 18 that contacts the tape pack 17 instead of the side that is disposed toward the drive roller 20 and the guide rollers 22 and 24. However, if the drive belt of the present invention is used in this manner, no benefit will be derived from the improved wear characteristics of the coating, which have an effect only if the coated side of the belt is disposed toward the rollers.

Thus, the drive belt 18 can be used to dissipate voltage build-up within the cartridge 10 by installing the belt in the cartridge and driving the belt with the drive puck 26 so as to transfer the tape 16 from one of the tape hubs 12, 14 to the other, thereby dissipating voltage build-up within the cartridge.

The tension of the magnetic tape 16 forming the tape pack 17 can be improved by the use of a drive belt tension gradient device 36. As shown in FIGURE 5, the belt tension gradient device 36 is provided between the guide rollers 22 and 24. The belt tension gradient device 36 should contact the side of the belt 18 that has the coating 42. The device 36 can be positioned anywhere between the guide rollers 22 and 24 so long as the device contacts the belt, e. g., it can be positioned in the exact middle between the two guide rollers or adjacent one of them. The tension gradient provided by the device 36 can be increased by moving further into the path of the drive belt 18, thereby increasing the wrap angle of the belt around the device. The tension gradient can also be increased by moving the device 36 closer to either guide roller 22 or 24. The device 36 is preferably a pin made of a metal such as stainless steel. The pin preferably has a diameter of about 2.4 mm. The pin can be installed in the cartridge 10 by punching or drilling a hole in the base plate of the cartridge and inserting the pin into the hole. In another embodiment, the device 36 can include a second metal pin positioned anywhere between the guide rollers 22 and 24 so long as it contacts the coated surface of the belt 18.

The device 36 provides more uniform average tape tension and higher minimum tape tension levels over a range of tape transport speeds. This is desirable because belt-driven tape cartridges must meet minimum tape tension specifications while simultaneously operating within maximum allowable drive force specifications. The tape tension must not fall below a certain level as the tape passes from hub to hub or contact between a read/write head and the tape will be insufficient to allow successful data transfer.

Because the use of the device 36 will increase the overall frictional drag on the belt 18, the lubricant provided between the inner surfaces of the guide rollers 22 and 24 and the pins about which they rotate should be less viscous than the lubricant typically used. This ensures that the belt tension gradient device 36 will change the nature of the frictional drag applied to the belt 18, rather than simply increasing the total drag.

The coating 42 preferably comprises organic and inorganic particles dispersed in a polymeric binder. Polymeric binders of the present invention should be flexible and durable enough to withstand the high speeds and abrupt starts and stops experienced by a data cartridge drive belt. Useful materials for use as the polymeric binder include any polymeric material known to be useful for forming the binder in magnetizable or backside coatings of magnetic recording tape.

Preferably, the polymeric binder of the present invention is obtained from raw materials comprising a hydroxy functional polyurethane and an isocyanate functional cross-linking agent ("activator"). Preferred polyurethane polymers are polyurethane block polymers. A particularly preferred polyurethane block polymer derived from 4,4'-diphenylmethane diisocyanate is commercially available as Estane 5705-F1P from B.F. Goodrich, Inc.

Optionally, the polymeric binder materials can further comprise a hard component resin which can be blended and cross-linked together with the hydroxy functional polyurethane and the activator. Examples of hard component resins include high-molecular weight copolymers of bisphenol A and epichlorohydrin. A particularly preferred hard component resin is Phenoxy PKHH brand phenoxy resin, which is available from Union Carbide.

The coating of the present invention includes both organic and inorganic particles. As used herein, carbon black particles are considered to be organic particles. The organic particles are preferably carbon black particles having a

diameter within the range of from about 1 nm to 500 nm, more preferably within the range from abut 30-50 nm, and most preferably about 42 nm ± 2.5 nm. Particles having a diameter of 42 nm ± 2.5 nm are available from Chevron, Inc. in Cedar Bayou, Texas, and are called "100% compressed acetylene carbon black pigment." Although it is believed that a particular BET Specific Surface Area may not be critical to the practice of the present invention, carbon black particles having a BET Specific Surface Area of about 80 $m^2/g$ have been found to be particularly useful. The carbon black is used in an amount such that the dried coating comprises 20-50 weight percent, more preferably about 30-40, and most preferably about 34 weight percent of carbon black.

The inorganic particles can be aluminum oxide ($Al_2O_3$). The aluminum oxide particles preferably have a diameter within the range of from about 10 nm to 50 μm, and more preferably from about 0. μm to 10 μm. Most preferably, the particles should have a median particle diameter of about 0.5 μm, wherein 93-99% of the particles are greater than 0.2 μm in diameter, 52-65 % are greater than 0.5 μm, 9-15% are greater than 1 μm, and less than 1% are greater than 10 μm. The aluminum oxide particles are used in an amount such that the dried coating comprises 1-10, more preferably 2-5, and most preferably about 3 weight percent of aluminum oxide.

The isocyanate crosslinking agent can be a polyfunctional isocyanate having an average functionality of at least 2 isocyanate groups per molecule. One example of a specific polyfunctional isocyanate useful as the isocyanate crosslinking agent in the practice of the present invention is a toluene diisocyanate alcohol adduct commercially available as Mondur CB-601 from Miles Corporation, formerly Mobay Chemical Corporation. It has been found that the isocyanate crosslinking. agent can be used to help to reduce the coefficient of friction of the final dried coating on the belt, which may result in reduced wear on the rollers.

The isocyanate crosslinking agent is preferably used in an amount such that the molar ratio of NCO groups from the isocyanate crosslinking agent relative to the total number of hydroxy groups from the polymers is in the range of from 0.2 to 3.0, more preferably 0.4 to 1.5, and most preferably is about 0.6. The crosslinking agent, if any is used, is mixed into the dispersion just prior to the time that the dispersion is coated onto a sheet of polymeric material from which the drive belts will be cut as described below.

In addition to the isocyanate crosslinking agent, the dispersion of the present invention may also comprise one or more conventional additives such as lubricants; abrasives; thermal stabilizers; antioxidants; dispersants; wetting agents; antistatic agents; fungicides; bactericides; surfactants; coating aids; nonmagnetic pigments; and the like in accordance with practices known in the art.

The coating 42 may also contain a dispersing agent to facilitate dispersion of the organic and inorganic particles in the polymeric binder. Any of the known dispersing agents, or mixtures of the known dispersing agents, would be suitable for use in the present invention. Examples of suitable dispersing agents include soy products, phosphates, and anionic, cationic, or nonionic surfactants.

A preferred class of dispersing agents include phosphorylated polyoxyalkyl polyols exemplified by the formula:

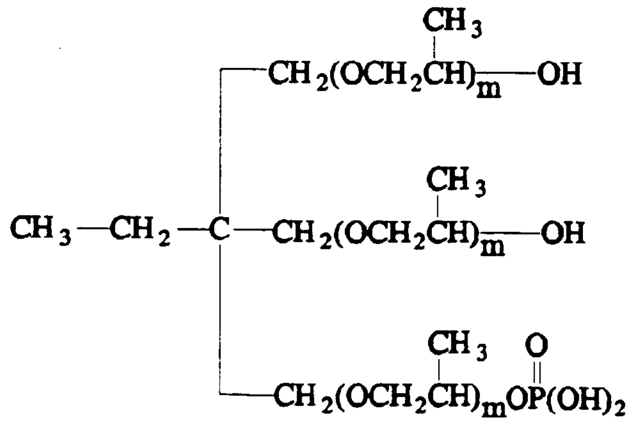

In the above formula, m is an integer from 1 to 5. Phosphorylated polyoxyalkyl polyols are described in U.S. Patent No. 4,889,895 (Chernega).

Other preferred dispersing agents include the Emcol dispersing agents such as Emcol Chloride, Emcol Phosphate, and Emcol Acetate, available from Witco Chemical, Organics Division, New York, N.Y. The Emcol compounds are polypropoxylated quaternary ammonium based cationic surfactants exemplified by the following formula:

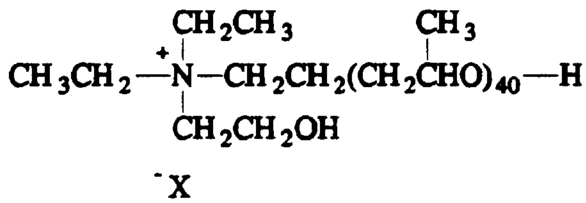

In the above formula, X may be phosphate, acetate, or chloride.

To prepare the drive belts of the present invention, the components of the coating 42 are combined in a suitable solvent and then milled to form a homogeneous dispersion. Suitable solvents may include ketones such as acetone, methyl ethyl ketone ("MEK"), methyl isobutyl ketone, or cyclohexanone; alcohols such as methanol, ethanol, propanol, or butanol; esters such as methyl acetate, ethyl acetate, butyl acetate, ethyl lactate, or glycol diacetate; monoethyl ether or the like; tetrahydrofuran (THF); glycol ethers such as ethylene glycol dimethyl ether, or ethylene glycol monoethyl ether; dioxane or the like; aromatic hydrocarbons such as benzene, toluene, or xylene; aliphatic hydrocarbons such as hexane or heptane; nitropropane or the like; and mixtures thereof. Generally, the solvent is used in an amount such that the dispersion contains 10% to 40% solvent by weight.

When an isocyanate crosslinking agent is added to the dispersion, a catalyst can also be added in suitable catalytic amounts to the dispersion to facilitate the crosslinking reaction. The catalyst can be any catalyst known in the art for catalyzing the reaction of NCO moieties with hydroxy moieties.

The coating solution can be coated onto a substrate such as a sheet of polyurethane (which will ultimately be stamped to provide rings which in turn are stretched into drive belts). The substrate should be laminated, e.g., by extrusion lamination, to a release liner, such as a 152 μm thick polypropylene film. The release liner should have sufficient strength to prevent distortion during the extrusion and coating processes. There should also be sufficient adhesion between the substrate and the release liner to prevent distortion during the coating process.

The substrate and liner can then be transported through a nip roll and calendaring roll stack so that a matte finish is impressed onto the surface of the substrate and the substrate is calendared to the desired thickness. It is highly desirable that uniform belt thickness be maintained for consistent performance of the cartridge. Non-uniformity can cause uneven stretching with the resultant possibility of a broken belt or some other defect in performance.

The coating solution may be applied by any of several generally known coating techniques, such as reverse roll, Gravure, and die coating. The thickness of the applied coating fluid should be such that after the coating fluid has dried on the substrate, it is about 1-10μm thick. Preferably, the dried coating is 2.5μm thick and adheres well to the substrate.

The coating solution can be dried on the substrate using a two-step drying process. The first drying step involves drying the coating solution for between 30 seconds and 10 minutes at a temperature within the range of about 40-70°C. A drying time of about 1 minute at a temperature of about 54°C is preferred.

The second drying step involves a longer dwell time and a higher temperature. The dwell time and temperature should be sufficient to evaporate the residual solvent in the coating solution. The dwell time can range from one to several hours, and the temperature can range from about about 70-115°C. A drying time of about 4 hours at a temperature of about 104°C is preferred. During this drying step, the substrate should be suitably tensioned to minimize curl of the substrate during drying. This tensioning may be accomplished by the use of the release liner. The coated substrate is then stamped to form a series of rings.

The coated rings are then stretched into belts by a "hot stretching process" wherein the ring is heated while it is stretched and the tension in the belt remains constant during the stretching process. During the stretching process, the entire length of the belt is rotated several times past an infrared heat source so that the entire length of the belt is heated evenly. The hot stretching process creates a belt that will maintain a fairly stable tension range over the life of the cartridge.

The hot stretching process is also advantageous in that the coated belts of the present invention stretched in this manner have lower resistivity than if they were stretched without the use of heat. Hot stretched coated belts can have a resistivity in the range of from about 25 to 280 ohm-cm, while "cold" stretched belts have a resistivity of about 4,600 to 46,000 ohm-cm.

The present invention will now be further described with regard to the following non-limiting examples.

Example 1

The following were milled until a smooth dispersion was obtained:

| | Parts by Weight |
|---|---|
| Carbon black (average particle size 40 nm) | 6 |
| $Al_2O_3$ (medium particle size 0.5 µm) | 0.5 |
| Phenoxy PKHH (25% solution) | 14 |
| Estane 5705 (15% solution) | 35 |
| Phosphorylated polyoxyalkyl polyol dispersion | 0.2 |
| Emcol Acetate | 0.2 |
| Toluene | 1.2 |
| Methyl Ethyl Ketone | 0.8 |
| Tetrahydrofuran | 42 |

Just prior to coating the dispersion on a substrate, an additional 3 parts by weight of Mondur CB-601 was then added as an activator. The dispersion was then coated onto a polyurethane substrate having a thickness of 0.13 - .25 mm, which was provided on a release liner as described above. The coated substrate was then subjected to a first drying step of 54°C for about 80 seconds and a second drying step of 104°C for four hours. The resultant dried coating was about 2.5 µm thick and was comprised of about 34% by weight of carbon black and about 3% by weight of aluminum oxide.

Rings were then stamped out of the coated substrate and hot stretched into drive belts. During the hot stretching process, the coated belts were rotated several times past an infrared light source for about 2.5 seconds. The infrared light source was a line heater having a maximum output of 1,000 watts. The line heater had elliptical reflectors which serve to focus the infrared light on a line target located 10.2 cm away from the heater. One such heater is Infrared Line Heater 5193-2 available from Research, Inc. The belt was then aligned 10.2 cm away from the heater. The heater was then set at about 350 watts at the beginning of the 2.5 second process, and was gradually raised to 450 watts by the end of the process. The resistivity of the hot stretched coated belts was measured to be within the range of from about 25 ohm-cm to about 280 ohm-cm.

The coated belts were then tested to evaluate their ability to minimize voltage build-up within the cartridge. A coated belt according to the present invention was mounted around a drive roller and a guide roller. A first motor rotated the drive roller, and a second motor was applied to the guide roller to create a drag on the belt to simulate the drag created by the tape pack in a cartridge. A Monroe electrostatic voltmeter was used to measure the voltage build-up on the belt as it was rotated.

A similar experiment was carried out on a non-coated (prior art) belt, such as the embossed belt disclosed in US-A-4,466,564. The voltage measured for the uncoated belt was about 5,000 to 20,000 volts. The voltage measured for the coated belt was only about 200 to 400 volts. Thus, the coating effected a 25-fold decrease in the voltage build-up.

The coated belts were then tested to compare their wear reducing properties with those of prior art drive belts. In one cartridge, the drive belt was installed so that the coating 42 of the present invention was provided on the inner surface 44 of the substrate 40, as shown in FIGURE 2, so that the coating contacted rollers 20, 22 and 24. In a second cartridge, the drive belt was installed so that the coating was provided on the outer surface 46 of the substrate 40, so that the coating contacted the tape pack 17 instead of the rollers 20, 22 and 24. As explained earlier, when the coating 42 is provided on the outer surface 44 of the substrate 40, the coating on the substrate still acts to reduce voltage build-up and electrical discharge. However, the belt in the second cartridge does not reduce wear on the rollers because the coated-side does not contact the rollers. By comparing two cartridges having the drive belts installed with the coating on opposite sides of the belt, it is possible to isolate and measure the wear-reducing characteristics of the coated belt of the present invention.

The wear reducing properties of the coated belt of the present invention were evaluated by running the magnetic tape in the two cartridges from beginning to end several thousand times. A graph 50 showing the average cumulative wear on a drive roller as a function of the number of passes of the tape is shown in FIGURE 3. Line 54 represents the results for the cartridge where the coated-side of the drive belt contacts the rollers. Line 52 represents the results for the cartridge where the coated-side of the drive belt contacts the tape pack.

As graph 50 shows, after 1,000 passes the surface of the drive roller of the second cartridge has been worn down by nearly 5 µm (thereby decreasing the diameter of the roller by twice that amount, 10 µm). See line 52. In contrast, the surface of the drive roller of the first cartridge, where the coated-side of the belt contacts the rollers, has been worn down by less than 1 µm. See line 54. After 15,000 passes, the drive roller of the second cartridge has been worn by about 8 µm, while the drive roller of the first cartridge has been worn down by only about 2 µm. Accordingly, the coating

has effected a 4-fold decrease in the wear of the drive roller.

Another two cartridges were then tested to determine the number of errors in the magnetic tape per pass as a function of the number of times the tape had been run from beginning to end. As explained above, these errors should be a function of the number of particles worn off the rollers because both variations of the coated drive belts have conductive properties that reduce the number of transient errors due to voltage build-up and static discharge.

A graph 60 showing the average number of errors per pass due to loose particles in the cartridge as a function of the number of tape passes is shown in FIGURE 4. Line 62 represents a second cartridge with the drive belt 18 comprised of a coating 42 on the outer surface 46 of the substrate 40, so that the coated side of the belt 18 contacts the tape pack 17 instead of the rollers 20, 22 and 24. Line 64 represents a first cartridge, where the coated side of the belt contacts the rollers. The number of errors per pass for both belts remains about the same for the first 10,000 passes. After the first 10,000 passes, however, the number of transient errors per pass increases dramatically for the second cartridge (line 62), while remaining relatively constant for the first cartridge (line 64). After 15,000 passes, the second cartridge has about 800 errors per pass, compared with only about 50 errors per pass for the first cartridge. Thus, the coating has effected a 16-fold decrease in the number of errors due to loose particles in the cartridge. A visual inspection of the two cartridges confirmed that there were significantly more loose wear particles present in the second cartridge than in the first cartridge.

Example 2

A coated drive belt similar to the one described in Example 1 was installed in a 3M DC6525 5.25 inch (13.3 cm) form factor data cartridge having a belt tension gradient device so that the coated surface of the belt contacted the device. The belt tension gradient device was a stainless steel pin having a diameter of 2.4 mm. The center-to-center spacing of the steel pin and a guide roller was 55.9 mm in the direction of a line parallel to a line passing through the centers of the two guide rollers, and 7.6 mm in the direction perpendicular to the line passing through the centers of the guide rollers. The guide rollers each had a radius of 7.9 mm.

A second coated belt, identical to the first, was installed in a second cartridge which was identical to the first, except that there was no belt tension gradient device provided in the second cartridge. The second cartridge also differed from the first in that the guide rollers in the first cartridge were provided with a lubricant between their inner surfaces and the pins about which they rotate which was less viscous than the lubricant used for the guide rollers in the second cartridge. This was necessary in order to ensure that the belt tension gradient device changed the nature of the frictional drag applied to the belt rather than simply increasing the total drag.

A graph 70 of average tape tension as a function of tape transport speed is shown in FIGURE 6. A line 74 represents the average tape tension for the coated belt in the first cartridge (with the pin) and a line 72 represents the average tape tension for the coated belt in the second cartridge (without the pin).

The graph 70 shows that the use of the coated belt and pin provides higher average tape tension at lower tape transport speeds. The graph 70 also shows that the use of the coated belt and pin provides a more constant average tape tension for tape transport speeds ranging from 63 to 762 cm/sec.

Example 3

A coated drive belt similar to the one described in Example 1 was installed in a 3M DC2380 3.5 inch (8.9 cm) form factor data cartridge so that the coated side of the belt contacted the drive roller and guide rollers. Tests were performed on that cartridge, which are described below. The cartridge was then modified to include a belt tension gradient device, as shown in FIGURE 5. The cartridge was also modified by using a less viscous lubricant in the guide rollers, as described above in Example 2.

The belt tension gradient device was a stainless steel pin having a diameter of 2.4 mm. The center-to-center spacing of the steel pin and a guide roller was 5.1 mm in the direction of a line parallel to a line passing through the centers of the two guide rollers, and 5.1 mm in the direction perpendicular to the line passing through the centers of the guide rollers. The guide rollers each had a radius of 5.5 mm.

A graph 80 of minimum tape tension in the forward direction as a function of tape transport speed is shown in FIGURE 7. A line 82 represents the minimum tape tension for the original cartridge and a line 84 represents the minimum tape tension for the modified cartridge having the belt tension gradient device. The graph 80 shows that the coated belt and pin provide consistently higher levels of minimum tape tension for tape transport speeds ranging from 51 to 305 cm/sec.

Example 4

A coated drive belt as described in Example 1 was placed on a belt/pin interface friction tester which included a

Lion model 3207-7 force transducer. The belt was stretched to the normal belt length installed in a 3M DC6000 series data cartridge. This was done by stretching the belt around 1.59 cm diameter guide roller and a 1.74 cm diameter drive roller separated by 19.37 cm. The pin used was made of stainless steel and had a diameter of 2.4 mm. The pin intrusion depth was set at 0.51 mm at a position midway between the two rollers. The belt was run continuously on the tester for 15 hours. A second belt, similar to the first but turned inside-out so that its uncoated side faced the pin, was also run continuously on the tester for 15 hours.

A graph 90 of the coefficient of friction as a function of time is shown in FIGURE 8. A line 94 represents the coefficient of friction for the coated belt with its coated side contacting the pin. A line 92 represents the coefficient of friction for a coated belt that has been turned inside-out so that its uncoated side contacts the pin. As can be seen in FIGURE 8, the coefficient of friction of the belt having its coated side facing the pin remained relatively constant over the duration of the test. In contrast, the coefficient of friction of the belt which had its uncoated side facing the pin rose steadily over the first few hours and then fluctuated erratically for the remainder of the test.

The coated belt which was installed inside-out was worn by the pin, thereby creating a significant amount of belt debris on the pin as well as on the test platform. In contrast, the coated belt which was properly installed left very little belt debris on the pin and virtually no debris on the test platform.

## Claims

**1.** A belt-driven tape cartridge (10) including

- a tape pack (17) including a pair of hubs (12,14) on which is wound a length of tape (16), and
- a drive belt (18) wound around a drive roller (20), a pair of guide rollers (22,24), and the tape pack (17), wherein the drive belt (18) has inner (44) and outer (46) major surfaces, wherein the inner surface (44) is disposed toward the rollers (20,22,24) and the outer surface (46) is disposed toward the tape pack (17), and wherein a coating (42) is provided on a surface of the drive belt (18) and the coating (42) comprises a polymeric binder, wherein particles are dispersed in the polymeric binder, said particles include (a) carbon black particles and (b) aluminum oxide particles

**characterized in that**

- the coating (42) is provided on the inner surface (44) of the drive belt (18) for minimizing wear on the rollers (20,22,24) due to contact between the drive belt (18) and the rollers (20,22,24), wherein the aluminum oxide particles have a median diameter within the range from 0.1 µm to 10 µm.

**2.** The cartridge of claim 1, wherein the carbon black particles have an average diameter within the range of from about 30 nm to 50 nm.

**3.** The cartridge of claim 1 or 2, wherein the coating on the drive belt has a resistivity of less than about 1 x $10^4$ ohm-cm.

**4.** The cartridge of any one of claims 1 to 3, further including a belt tension gradient device (36) secured to the cartridge, wherein the belt tension gradient device (36) is provided between the two guide rollers (22,24) and contacts the inner surface (44) of the belt (18).

**5.** The cartridge of claim 4, wherein the belt tension gradient device (36) is a metal pin.

**6.** A method of minimizing wear on rollers in a belt-driven tape cartridge (10), wherein the cartridge (10) includes a pair of guide rollers (22,24), a drive roller (20), a tape pack (17) comprised of a magnetic tape (16) wound around a pair of tape hubs (12,14), and a drive belt (18) wound around the tape packs (17) and the rollers (20,22,24), including the steps of

- providing a drive belt (18), the drive belt (18) including
  - a substrate (40) having inner (44) and outer (46) major surfaces, wherein the inner surface (44) is adapted to be disposed toward the rollers (20,22,24), and the outer surface (46) is adapted to be disposed toward the tape pack (17), and
  - a coating (42) provided on a surface of the belt (18) and comprising a polymeric binder, wherein particles are dispersed in the polymeric binder, said particles include (a) carbon black particles and (b) aluminum

oxide particles

characterized by the further steps of

- providing the coating (42) on the inner surface (44) of the substrate (40) for minimizing wear on the rollers (20,22,24) due to contact between the belt (18) and the rollers (20,22,24), wherein the aluminum oxide particles have a median diameter within the range from about 0.1 µm to 10 µm,
- installing the belt (18) in the cartridge (10) so that the inner surface (44) of the belt (18) contacts the rollers (20,22,24), and
- driving the belt (18), whereby the coating (42) minimizes the wear of the rollers (20,22,24) by the belt (18).

**7.** The method of claim 6, wherein the carbon black particles have an average diameter within the range of from about 30 nm to 50 nm.

**Patentansprüche**

**1.** Riemenbetriebene Bandkassette (10) mit

- einem Bandwickel (17) mit einem Paar Spulen (12, 14), auf die ein Band (16) gewikkelt ist, und

- einem um eine Antriebsrolle (20), ein Paar Führungsrollen (22, 24) und den Bandwikkel (17) gewickelten Antriebsriemen (18), wobei der Antriebsriemen (18) innere (44) und äußere (46) Hauptflächen aufweist, wobei die innere Fläche (44) den Rollen (20, 22, 24) zugewandt und die äußere Fläche (46) dem Bandwickel (17) zugewandt ist, und wobei eine Beschichtung (42) an einer Fläche des Antriebsriemens (18) vorgesehen ist und die Beschichtung (42) ein polymeres Bindemittel aufweist, wobei in dem polymeren Bindemittel Partikel dispergiert sind, die (a) Rußpartikel und (b) Aluminiumoxid-Partikel aufweisen,

**dadurch gekennzeichnet,** daß

- zum Minimieren des Verschleißes an den Rollen (20, 22, 24) aufgrund von Kontakt zwischen dem Antriebsriemen (18) und den Rollen (20, 22, 24) die Beschichtung (42) an der inneren Fläche (44) des Antriebsriemens (18) vorgesehen ist, wobei die Aluminiumoxid-Partikel einen mittleren Durchmesser im Bereich von 0,1 µm bis 10 µm aufweisen.

**2.** Kassette nach Anspruch 1, wobei die Rußpartikel einen mittleren Durchmesser im Bereich von etwa 30 nm bis 50 nm aufweisen.

**3.** Kassette nach Anspruch 1 oder 2, wobei die Beschichtung an dem Antriebsriemen einen Widerstand von weniger als etwa $1 \cdot 10^4$ ohm·cm aufweist.

**4.** Kassette nach einem der Ansprüche 1 bis 3, ferner mit einer an der Kassette angebrachten Bandspannungsgradiervorrichtung (36), die zwischen den beiden Führungsrollen (22, 24) vorgesehen ist und mit der inneren Fläche (44) des Bandes in Kontakt steht.

**5.** Kassette nach Anspruch 4, wobei die Bandspannungsgradiervorrichtung (36) ein Metallstift ist.

**6.** Verfahren zum Minimieren des Verschleißes an Rollen bei einer riemenbetriebenen Bandkassette (10), wobei die Kassette ein Paar Führungsrollen (22, 24), eine Antriebsrolle (20), einen Bandwickel (17), der ein um ein Paar Bandspulen (12, 14) gewickeltes Magnetband (16) aufweist, und einen um die Bandwickel (17) und die Rollen (20, 22, 24) gewickelten Antriebsriemen (18) aufweist, mit den Schritten:

- Vorsehen eines Antriebsriemens (18), mit

  - einem Substrat (40) mit einer inneren (44) und einer äußeren (46) Hauptflächen, wobei die innere Fläche (44) geeignet ist, den Rollen (20, 22, 24) zugewandt zu sein, und die äußere Fläche (46) geeignet ist, dem Bandwickel (17) zugewandt zu sein, und

- einer an einer Fläche des Antriebsriemens (18) vorgesehenen Beschichtung (42), die ein polymeres Bindemittel aufweist, wobei in dem polymeren Bindemittel Partikel dispergiert sind, die (a) Rußpartikel und (b) Aluminiumoxid-Partikel aufweisen,

gekennzeichnet durch die weiteren Schritte:

- Vorsehen der Beschichtung (42) an der inneren Fläche (44) des Substrats (40) zum Minimieren des Verschleißes an den Rollen (20, 22, 24) aufgrund von Kontakt zwischen dem Band (18) und den Rollen (20, 22, 24), wobei die Aluminiumoxid-Partikel einen mittleren Durchmesser im Bereich von 0,1 µm bis 10 µm aufweisen,

- Installieren des Riemens (18) in der Kassette (10), derart, daß die innere Fläche (44) des Riemens (18) mit den Rollen (20, 22, 24) in Kontakt steht, und

- Antreiben des Riemens (18), wobei die Beschichtung (42) den Verschleiß der Rollen (20, 22, 24) durch den Riemen minimiert.

7. Verfahren nach Anspruch 6, wobei die Rußpartikel einen mittleren Durchmesser im Bereich von etwa 30 nm bis 50 nm aufweisen.

**Revendications**

1. Cassette de bande (10) à entraînement par courroie comprenant :

☐ une bobine de bande (17) comprenant une paire de moyeux (12, 14) sur laquelle est enroulée une longueur de bande (16), et

☐ une courroie d'entraînement (18) enroulée autour d'un rouleau d'entraînement (20), d'une paire de rouleaux de guidage (22, 24), et de la bobine de bande (17), la courroie d'entraînement (18) ayant des surfaces principales intérieure (44) et extérieure (46), la surface intérieure (44) étant disposée vers les rouleaux (20, 22, 24) et la surface extérieure (46) étant disposée vers la bobine de bande (17), et dans laquelle on dépose un revêtement (42) sur une surface de la courroie d'entraînement (18) et le revêtement (42) comprend un liant polymérique, des particules étant dispersées dans le liant polymérique, lesdites particules comprenant (a) des particules de noir de carbone et (b) des particules d'oxyde d'aluminium,

caractérisée en ce que

☐ le revêtement (42) est déposé sur la surface intérieure (44) de la courroie d'entraînement (18) pour minimiser l'usure des rouleaux (20, 22, 24) due au contact entre la courroie d'entraînement (18) et les rouleaux (20, 22, 24), les particules d'oxyde d'aluminium ont un diamètre moyen de l'ordre de 0,1 µm à 10 µm.

2. Cassette selon la revendication 1, dans laquelle les particules de noir de carbone ont un diamètre moyen de l'ordre d'environ 30 nm à 50 nm.

3. Cassette selon la revendication 1 ou 2, dans laquelle le revêtement de la courroie d'entraînement a une résistivité inférieure à environ $1 \times 10^4$ ohm·cm.

4. Cassette selon l'une quelconque des revendications 1 à 3, comprenant en outre un dispositif à gradient de tension (36) de la courroie, fixé à la cassette, dans laquelle le dispositif à gradient de tension (36) de la courroie est placé entre les deux rouleaux de guidage (22, 24) et est en contact avec la surface intérieure (44) de la courroie (18).

5. Cassette selon la revendication 4, dans laquelle le dispositif à gradient de tension (36) de la courroie est un ergot métallique.

6. Procédé pour minimiser l'usure des rouleaux dans une cassette de bande à entraînement par courroie (10), dans lequel la cassette (10) comprend une paire de rouleaux de guidage (22, 24), un rouleau d'entraînement (20), une bobine de bande (17) constituée d'une bande magnétique (16) enroulée autour d'une paire de moyeux de bande (12, 14), et une courroie d'entraînement (18) enroulée autour de la bobine de bande (17) et des rouleaux (20, 22,

24), comprenant les étapes consistant à

- ☐ placer une courroie d'entraînement (18), la courroie d'entraînement (18) comprenant
  - ♦ un substrat (40) ayant des surfaces principales intérieure (44) et extérieure (46), dans lequel la surface intérieure (44) est appropriée pour être disposée vers les rouleaux (20, 22, 24), et la surface extérieure (46) est appropriée pour être disposée vers la bobine de bande (17), et
  - ♦ un revêtement (42) déposé sur une surface de la courroie d'entraînement (18) et comprenant un liant polymérique, des particules étant dispersées dans le liant polymérique, lesdites particules comprenant (a) des particules de noir de carbone et (b) des particules d'oxyde d'aluminium,

caractérisé par les étapes suivantes consistant à

- ☐ déposer le revêtement (42) sur la surface intérieure (44) du substrat (40) pour minimiser l'usure des rouleaux (20, 22, 24) dû au contact entre la courroie d'entraînement (18) et les rouleaux (20, 22, 24), les particules d'oxyde d'aluminium ayant un diamètre moyen de l'ordre d'environ 0,1 µm à 10 µm,
- ☐ installer la courroie (18) dans la cassette (10) de sorte que la surface intérieure (44) de la courroie (18) soit en contact avec les rouleaux (20, 22, 24), et
- ☐ entraîner la courroie (18), ce faisant, le revêtement (42) minimise l'usure des rouleaux (20, 22, 24) par la courroie (18).

**7.** Procédé selon la revendication 6, dans lequel les particules de noir de carbone ont un diamètre moyen de l'ordre d'environ 30 nm à 50 nm.

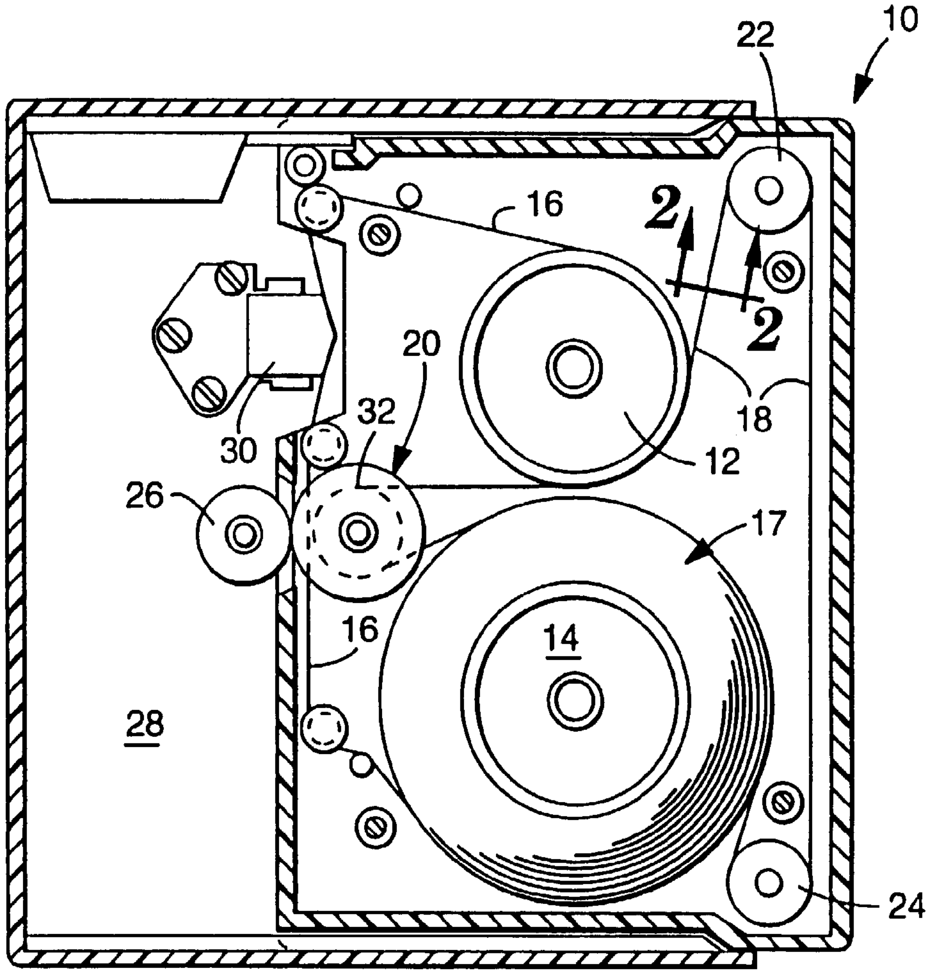


*Fig. 1*

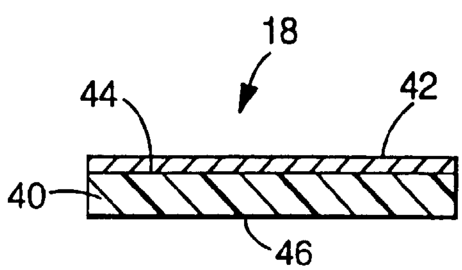


*Fig. 2*

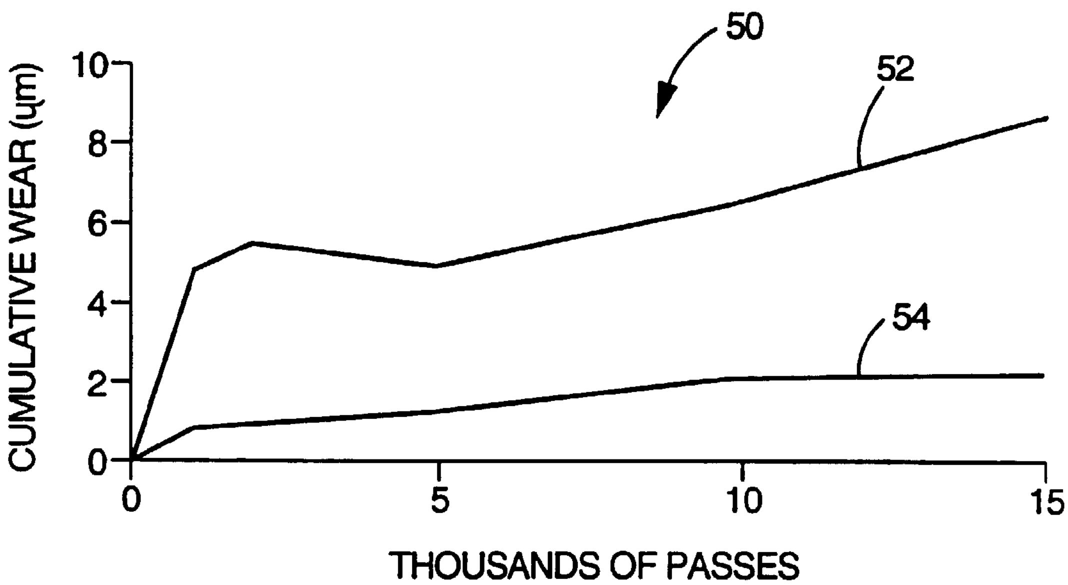
50
52
54
CUMULATIVE WEAR (μm)
10
8
6
4
2
0
0
5
10
15
THOUSANDS OF PASSES

*Fig. 3*

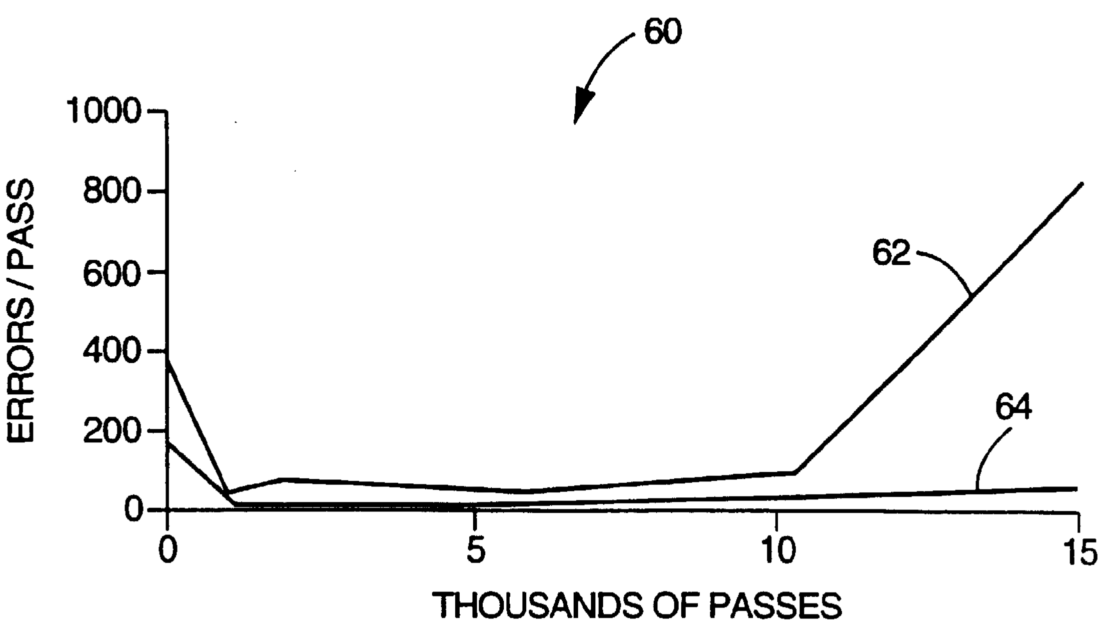
60
62
64
ERRORS / PASS
1000
800
600
400
200
0
0
5
10
15
THOUSANDS OF PASSES

*Fig. 4*

*Fig. 5*

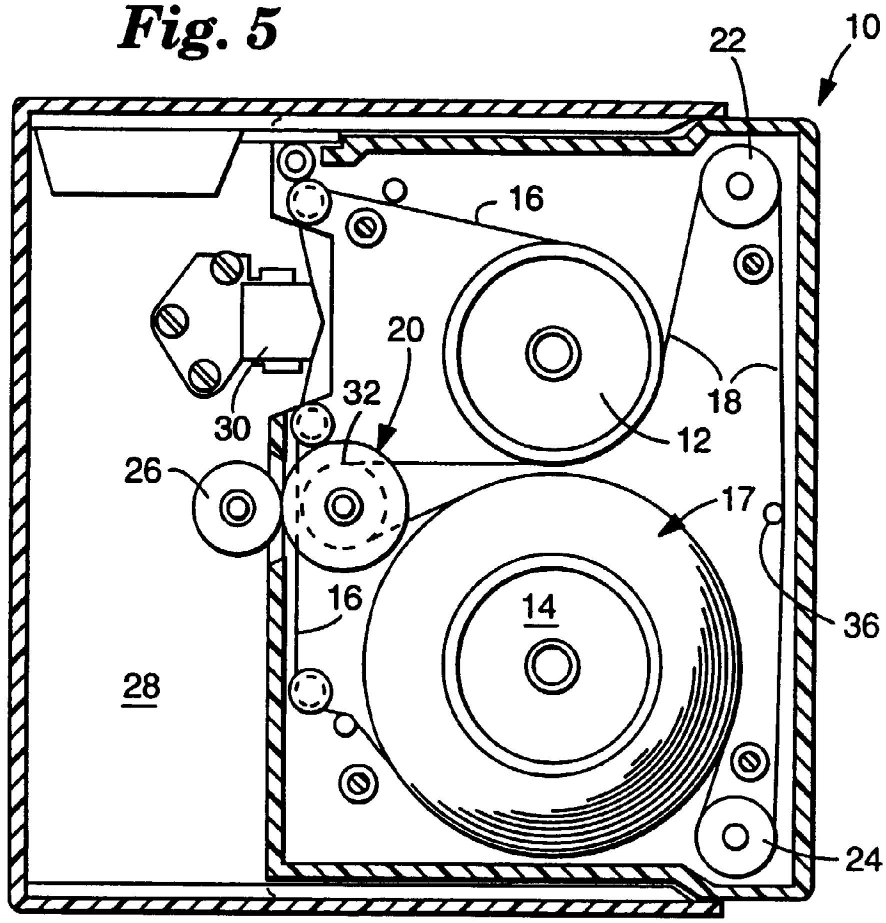
10
22
16
20
32
30
18
12
26
17
16
14
36
28
24

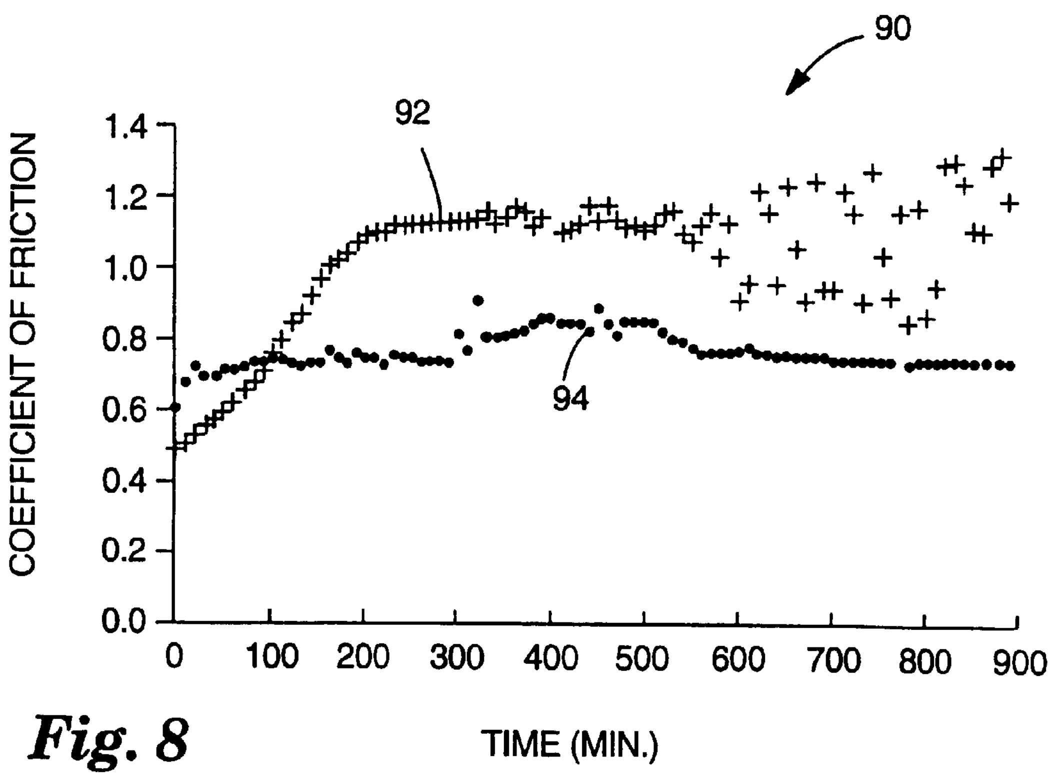
90
92
94
COEFFICIENT OF FRICTION
1.4
1.2
1.0
0.8
0.6
0.4
0.2
0.0
0
100
200
300
400
500
600
700
800
900
TIME (MIN.)

*Fig. 8*

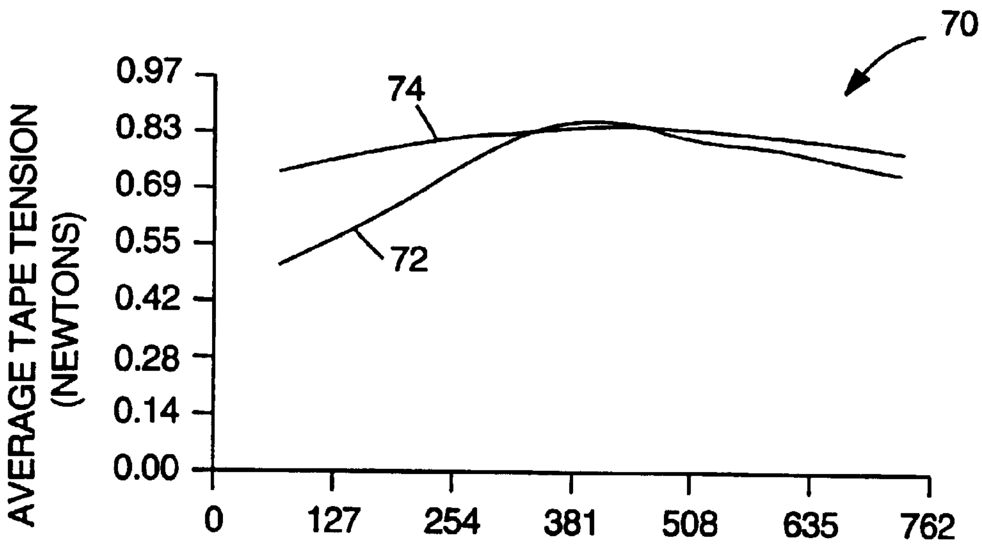
70
74
72
0.97
0.83
0.69
0.55
0.42
0.28
0.14
0.00
AVERAGE TAPE TENSION (NEWTONS)
0
127
254
381
508
635
762
TAPE SPEED (CM/S)

*Fig. 6*

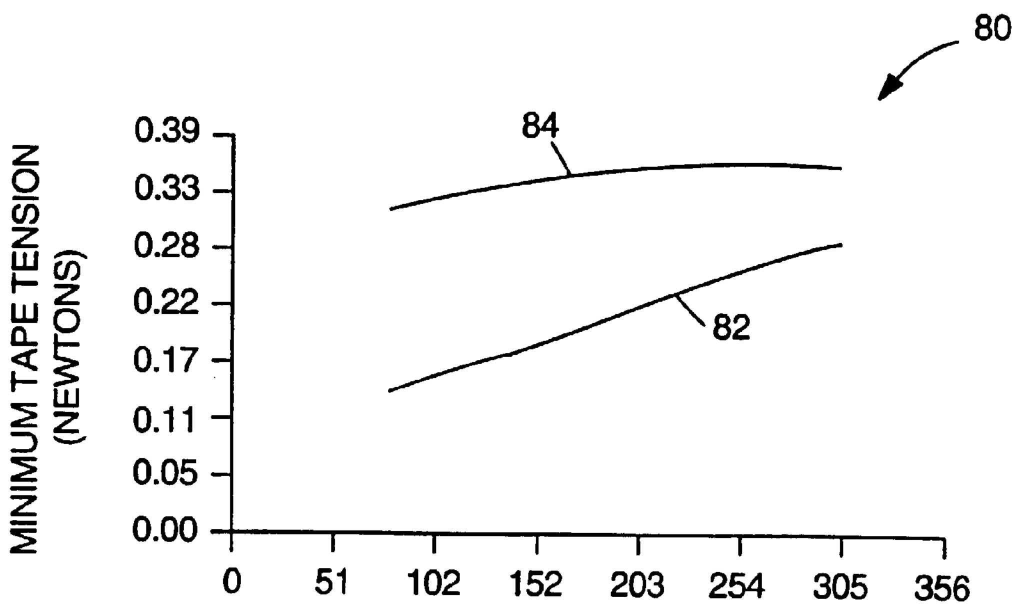
80
84
82
0.39
0.33
0.28
0.22
0.17
0.11
0.05
0.00
MINIMUM TAPE TENSION (NEWTONS)
0
51
102
152
203
254
305
356
TAPE SPEED (CM/S)

*Fig. 7*